Europäisches Patentamt

European Patent Office

Office européen des brevets

(19)

(11) Veröffentlichungsnummer: **0 181 563 B2**

(12) # NEUE EUROPÄISCHE PATENTSCHRIFT

(45) Veröffentlichungstag der neuen Patentschrift:
**21.11.91 Patentblatt 91/47**

(51) Int. Cl.⁵: **A23B 7/04, B65G 33/00,
B65B 63/08**

(21) Anmeldenummer: **85113786.9**

(22) Anmeldetag: **29.10.85**

(54) **Kühl-Förderschnecke.**

(30) Priorität: **13.11.84 DE 3441425**

(43) Veröffentlichungstag der Anmeldung:
**21.05.86 Patentblatt 86/21**

(45) Bekanntmachung des Hinweises auf die
Patenterteilung:
**18.05.88 Patentblatt 88/20**

(45) Bekanntmachung des Hinweises auf die
Entscheidung über den Einspruch:
**21.11.91 Patentblatt 91/47**

(84) Benannte Vertragsstaaten:
**AT BE CH FR GB IT LI NL SE**

(56) Entgegenhaltungen:
**CH-A- 557 283
DE-A- 1 551 385
DE-A- 2 242 530
DE-A- 3 037 599**

(56) Entgegenhaltungen:
**FR-A- 751 884
US-A- 3 214 928
OTTO-ALBRECHT NEUMÜLLER "Römpps
Chemie-Lexikon", Band 5, 1975, FRANCKH'-
SCHE VERLAGSHANDLUNG, Stuttgart Seiten
3341-3343
JOSEF SCHORMÜLLER "Lehrbuch der Lebensmittelchemie", 1961 SPRINGER-VER-
LAG, Berlin, Göttingen, Heidelberg Seiten
206-208**

(73) Patentinhaber: **Tallafus, Ottmar
Am Himmelreich 14
W-6967 Buchen 1 (DE)**

(72) Erfinder: **Tallafus, Ottmar
Am Himmelreich 14
W-6967 Buchen 1 (DE)**

(74) Vertreter: **Trappenberg, Hans
Postfach 1909
W-7500 Karlsruhe 1 (DE)**

EP 0 181 563 B2

Jouve, 18, rue Saint-Denis, 75001 PARIS

## Beschreibung

Die Erfindung betrifft eine Einrichtung zum Kühlen und Hochfördern von emfpindlichem und verderblichem, geschnitzeltem Roh-Gemüse und Roh-Salaten in den Trichter einer Abpackstation unter Einsatz einer Schräg-Förderschnecke mit Aufgabetrichter.

Ron-Gemüse und Ron-Salate, also geschnittene bezienungsweise geschnitzeite Gurken, Tomaten, Paprika, Radieschen, Mohrrüben, Rote Rüben, Kohl, Kresse etc. müssen nicht nur sofort nach dem Schneiden weiterverarbeitet, sondern auch stets gekühlt werden. So kommen die einzeinen Produkte bereits schon gekühlt in die Bearbeitungstation, die jedoch nanezu Raumtemperatur aufweist. Nach dem Bearbeiten - Säubern, Waschen, Zertrennen - müssen die einzeinen Gemüse und Salatsorten, die in der Zwischenzeit nanezu Raumtemperatur angenommen haben, wieder heruntergekühlt werden auf eine Temperatur, die zwischen 1°C und 4°C liegen soll. Gleichzeitig ist es erwünscht, die verschiedenen Produkte zur Herstellung von Mischsalaten zu vermischen und sodann einer Abpackstation zuzuleiten. Zweckmäßigerweise soll dieser gesamte Vorgang nach dem Zerschneiden, also Abkühlen, Mischen und Abpacken, maschinell erfolgen, nicht nur weil das Arbeiten mit dem kalten Gut schwierig und Bedienkräften kaum zummutbar ist, sondern um auch die Hygienevorschriften für die Bearbeitung derartiger Produkte einhalten zu können.

Bei den bisherigen Anlagen stellte das Kühlen und Mischen des zu verarbeitenden Gutes stets einen Engpaß dar, da insbesondere das Kühlen jenach dem angelieferten Materiau und dessen Volumen eine bestimmte Zeit benötigt. In der gleichen Zeit können andere Produkte schon heruntergekühlt sein und zur Mischung bereit stehen, wobei jedoch die Mischung erst dann durchgeführt werden kann, wenn sämtliche Einzelprodukte die notwendige niedere Temperatur erriecht haben.

Das Mischen selbst bereitet auch dadurch Schwieirigkeiten, daß die beispielsweise oben angeführten nahrungsmittel sehr wasserhaltig sind, daher leicht zerquestscht werden können und dann unappetitlich aussenen bezienungsweise für den Verzehr kaum noch geeignet sind. Die bisher benutzen Mischgeräte konnten daher nur sehr geringe Mengen aufnehmen und diese auch nur diskontinuierlich verarbeiten. Bei diesem Mischen bestand darüber hinaus noch die Gefahr, daß sich das Gut wieder unzulässig erwärmt bezienungsweise sich während dieses Vorganges der Mikrobenbefall deutlich erhöht.

Hinzu kommt noch, daß das gemischte Gut der Abpackstation zugeleitet werden muß, was in aller Regel mit einem Hochfördern des Gutes in den Trichter der Abpackstation verbunden ist. Die bisher hierfür verwendeten Elevatoren konnten zwar das Gut in gewünschter Weise hochbefördern, jedoch erwärmte sich das Gut über die Förderzeit wiederum in unzulässiger weise. Die insbesondere dann, wenn auf einem der Bearbeitungsweise eine Stockung eintrat, so daß die Rohprodukte nicht kontinuierlich weggearbeitet werden konnten.

Die Erfindung stellt sich die Aufgabe, eine Einrichtung zum Transportieren bezienungsweise Hochfördern und Kühlen, wie auch zum gleichzeitigen Mischen von gerartigen Produkten anzugeben mit der nicht nur ein Kontinuierliches Arbeiten möglich ist, sondern bei der auch das stete Kühlen bezienungsweise Kühlhalten gewährieiset ist. Gelöst wird die Aufgabe durch die Merkmale des Anspruchs 1.

Nicht mehr also wie bisher werden die einzeinen Produktteile separat für sich gekühlt sondern sämtliche Produkte werden in den Aufgabetrichter einer Kühl- und Mischschnecke geführt und innerhalb dieser Förderschnecke sowohl miteinander vermengt, wie auch intensiv gekühlt. Selbstverständlich werden die ankommenden Einzelprodukte bereits schon kühl gehalten, beispielsweise indem sie in einem Kühltunnel dem Aufgabetrichter zugeführt werden oder ganz allgemein der Zuführraum kühlgehalten wird. Das Herunterkühlen auf die oben erwähnte gewünschte Temperatur zwischen 1° C und 4° C erfolgt jedoch erst beim Fördern in der Misch- und Kühlschnecke, die das Gut zur Abpackstation führt. Es erfolgt also im Zuge der Verarbeitung bezienungsweise Bearbeitung ein stetiges Herunterkühlen von der Temperatur, die die einzeinen Produkte bei der Anlieferung haben, bis zu der optimalen Temperatur zwischen 1°C und 4°C an der Abpackstation. Die bisher kaum vermeidbaren Temperatur schwankungen, die stets mit einer Qualitätseinbuße der bearbeiteten Produkte einhergingen, werden dadurch mit Sicherheit vermieden.

Außerdem ist nunmehr auch ein durchgehend kontinuierliches Arbeiten möglich, da die einzeinen Produkte gemeinsam dem Aufgabetrichter der Misch- und Kühlschnecke zugeleitet werden können und dort im kontinuierlichen Vorgang gemischt wie auch gekühlt werden. Stockungen, die durch den bisher notwendigen diskontinuierlichen Mischbetrieb auftraten, sind damit auch vermieden. Vermieden wird damit selbstverstäbdlich auch eine weitere, durch die Verwelldauer dieser sehr verderblichen Labensmittel einnergehenden Qualitätseinbuße.

Überraschenderweise hat sich gezeigt, daß mit der Vorrichtung nach der Erfindung nicht nur ein kühlen des eingangs erwähnten Gutes möglich ist, sondern auch Schockfrosten dieses Gutes wie auch weiterer zum Frosten geeigneter Lebensmittel. Hierzu muß lediglich über das Sprührohr flüssiges Kältemittel, beispielsweise flüssiger Stickstoff oder flüssiger Sauerstoff, auf das zu frostende Gut aufgesprüht werden. Hierbei sind ohne Schwierigkeiten Temperaturen bis -130°C bei Gefriergeschwindigkeiten bis 100 cm/h zu erreichen.

Schneckenförderer gehören selbstverständlich bereits zum Stande der Technik, auch Schneckenförderer, in denen das zu fördernde Gut gekühlt werden kann. So ist beispielsweise nacht der DE-OS-30 37 599 ein Schneckenförderer mit einer Trog gelargerter Schnecke bekannt, bei der nicht nur der Trog mit einem Doppelmantel zur Führung eines Wärmeaustauschmediums, also auch eines Kühlmediums, versehen ist, sondern auch im Bereich des Schneckenganges Rohre angeordnet sind, die vom gleichen Medium durchströmt werden können. Ein derartiger bekannter Schneckenförderer ist jedoch zum Schrägfördern und gleichzeitigen Mischen des empfindlichen, eingangs beschriebenen Gutes nicht geeignet, da die eingefügten Rohre dieses Gut zequestschen und damit unbrauchbar machen würden und da auch der Wärmeaustausch zwischen dem Mantel beziehungsweise der Rohren und dem Fördergut viel zu gering ist, um innerhalb der kurzen zur Verfügung stehenden Wegstrecke bezeihungsweise innerhalb der kurzen zur Verfügung stehenden Zeit das Fördergut um die gewünschte Temperaturspanne von 10°C bis 15°C herunterzukühlen. Dieser kurze Weg von knapp 2 bis 3 m beziehungsweise diese kurze zur Verfügung stehende Zeit ist jedoch dadurch vorgegeben, daß bei längerer Einwirkungsdauer der Schnecke auf das zu fördernde Gut eine Qualitätsminderung kaum zu vermeiden ist, da der stete Druck der Förderschnecke doch Schäden hervorrufen würde. Hinsichtlich des oben angeführten geringen Wärmeaustauches ist zu berücksichtigen, daß die Temperatur des Wärmeaustauschmediums des hohen Wassergehaltes des zu fördernden Gutes wegen nicht wesentlich unter 0°C liegen darf. Die Temperaturdifferenz zwichen dem eingefühlten Gut und dem Wärmeaustauschmedium ist daher äußerst gering, so daß ein Abkühlen des Gutes über den gesamten Querschnitt des Förderflusses inherhalb der angesprochenen kurzan Weglänge nicht möglich ist.

Die Erfindung geht hingegen den umgekahrten Weg: Statt den Trog zu kühlen, wird der Trog wärmeisolierend ausgeführt und das Gut direkt durch Einleiten von flüssigem und/oder gasförmigem kältemittel gekühlt. Zwar sind auch schon Schneckenförderer bekannt, bei denen in die Förderschnecke Flüssigkeit eingeleitet wird (FR-PS- 751 884), jedoch dient hier die Flüssigkeit zum Einleiten eines Umwandlungsprozesses des Fördergutes. Nach der Erfindung hingegen wird beim kühlen flüssiges Kältemittel nur dann eingeführt, wenn extreme Situationen auftreten, also verhältnismäßig warmes Fördergut eingefühlt wird; tritt jedoch eine Stockung bei der Förderung ein, so wird, um ein Erfrieren des Gutes zu vermeiden, nur gasförmiges Kältemittel eingedüst.

Vom Stand der Technik nach der DE-OS 22 23 769 unterscheidet sich der Gegenstand der Erfindung dadurch, daß die Schnecke an den Kanten abgerundet verdickt ist und daß der Abstand der Schnecke vom Trogboden etwa der doppelten Dicke des Fördergutes entspricht.

Gerade der vergrößerte Abstand zwischen der Schraubenfläche und der umfassenden Trogfläche, der nach der Erfindung etwa der doppelten Dicke der Fördergutes entsprechen soll, bewirkt überraschenderweise, daß die Produkte praktisch ohne Quetschstellen und auch gut durchmischt zum Auslauf der Kühlschnecke gefördert werden. Hierzu trägt siderlich auch die erfindungsgemäße Ausbildung der Kanten bei, die abgerundet verdickt sein sollen. Ein Einschneiden dieser Kanten in das zu fördernde Gut wird dadurch vermieden. Möglich ist auch, daß der gute Misch- und Fördereffekt durch die gleichzeitige Kühlung hervorgerufen wird, die die einzeinen Produkte etwas versteift und damit besser förderfähig macht.

Diese kühlung ergibt sich nicht nur dadurch, daß der gesamte Förderweg des Gutes kühl gehalten wird, sondern auch dadurch, daß einem weiteren Merkmal der Erfindung nach die Steigung der Wendel der Schnecke nach dem Aufgabetrichter deutlich größer wird als innerhalb dieses Aufgabetrichters, so daß das zu kühlende Gut aufgelockert wird und allseitig von den kühlenden Gasen umströmt werden kann. Auch hier ist festzustellen, daß eine derartige Schneckenausolldung, beispielweise nach der Be-PS 509 746. bekannt ist. Hier dient die Änderung der Wendelsteigund allerdings nich der Auflockerung um ein Umströmen durch ein Kühlmittel zu erreichen, sondern lediglich dazu, eine Stockung im Produktionsprozeß zu vermeiden.

Zweckmäßigerweise wird das Sprührohr beim Aufgabetrichter an die kältemittelzuleitung angeschlossen, da hier ger größte kältebedarf zum schnellen Herunterkühlen des Gutes besteht.

Die Einrichtung nach der Erfindung ist auch gleichzeitig als Dosierschnecke einsetzbar, wozu als Antriebsmotor ein Stellmotor gewählt wird. Hierdurch kann die Fördergeschwindigkeit des Gutes einreguliert und auch bei Erreichen einer bestimmten Menge sofort abgestoppt werden. Um auch tatsächlich ein sofortiges Abstoppen des geförderten Gutes zu erzielen, wird nach der Erfindung vorgeschlagen, daß sofort nach dem "Halt" Kommande durch eine entsprechende Dosiersteuerung nicht nur der Stellmotor anhält, sondern einige Umdrehungen zurückdrent, um mit Sicherheit zu erreichen, daß kein weiteres Gut nachdosiert wird.

Auch der Zeichnung ist die Einrichtung nach der Erfindung schematisch dargestellt, und zwar zeigen:

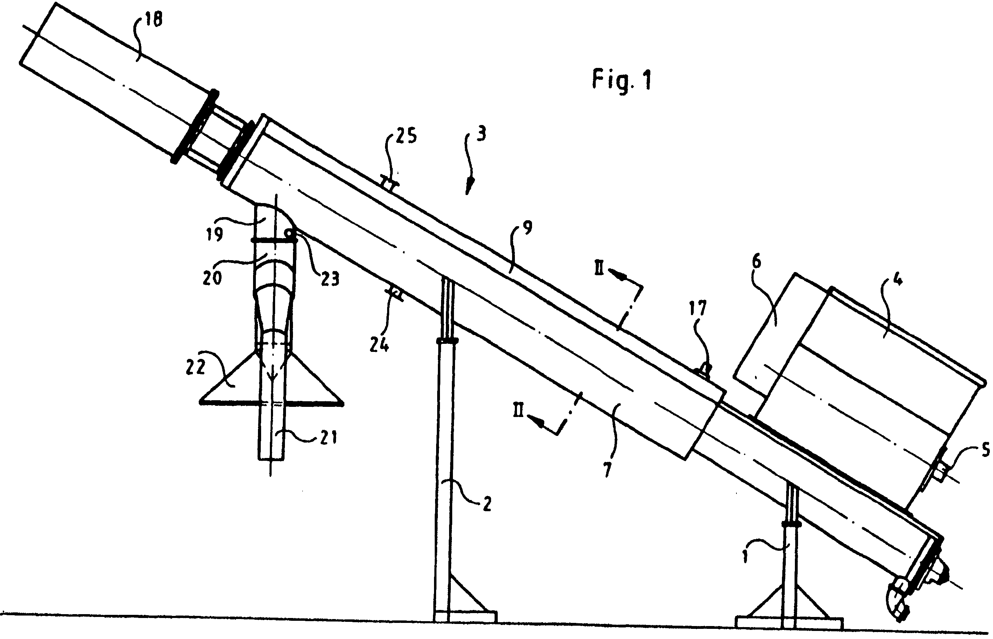

Fig. 1 eine Seitenansicht der Misch- und Förderschnecke,

Fig. 2 einen Schnitt nach der Schnittlinie II/II der Fig. 1 und

Fig. 3 eine Tellansicht der Schnecke.

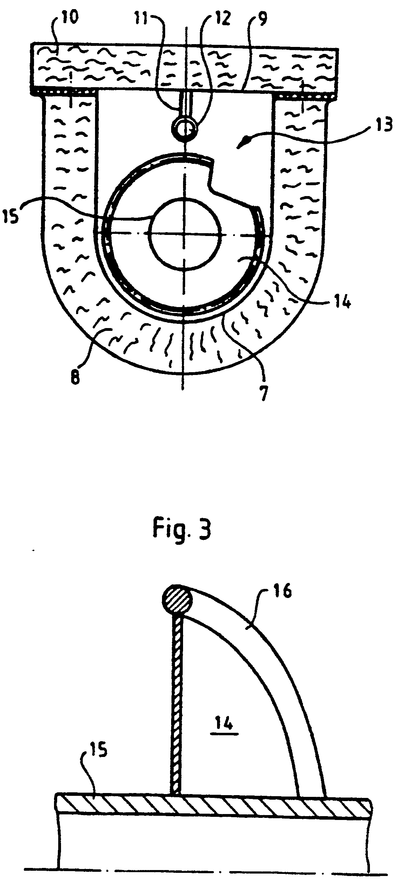

Auf stützen 1, 2 ist eine Misch- und Kühlschnecke 3 etwa in einem Winkel von 45° zur Horizontalen aufgelegt. Die Kühlschnecke 3 weist eingangsseitig einem Aufgabetrichter 4 auf, in dessen innerem eine hin- und zurückschwingende Kurbeiweile 5, die durch einem Pneumatik- oder Hydraulikzylinder, der im Genäuse 6 angeordnet ist, bewegt wird, angeordnet ist. Das zu fördernde Gut rutscht üb den aufgabetrichter4, gegevenenfalls unterstützt durch einen am Aufgabetrichter 4 angebrachten Rüttler in einen Trog 7 der Förderschnecke, der, wie deutlich aus Fig. 2 zu ersenen ist, mit einem isoliermantel 8 umgeben ist. Abgeschlossen wird der Trog 7 durch einen Deckel 9, der ebenfalls eine isolierung 10 aufweist. Am Deckel 9 ist über Ständer 11 ein Schührohr 12 angebracht, durch das flüssiges und/oder gasförmiges Kältemittel in das Schneckeninnere 13 einzuleiten ist. Der Zuleitungsstutzen 17 für dieses Sprühohr 12 befindet sich in der Nähe der Aufgabetrichters aufgesetzt auf den Deckel 9.

Die im Trog 7 angeordnete schraubengangförmige Schnecke 14 ist auf eine Hohlwelle 15 angeordnet und mit abgerundet verdickten Kanten 16 versehen. Diese Kanten weisen einen deutlichen Abstand vom umgebenden Trogboden auf, der etwa der doppelten Dicke des zu fördernden Gutes, beispielweise der doppelten Scheibendicke vor Gurkenscheiben oder der doppelten Steidicke von Pilzen etc., entspricht. Die Steigung der schraubengangfömigen Schnecke 14 soll nach dem Aufgabetrichter 4 deutlich größer sein als innerhalb dieses Aufgabetrichters. Dadurch wird eine Auflockerung des zu födenden Gutes und damit eine gute Umspülung mit den kühlen Gasen erreicht. Die Hohlweile 15 ist mit einem Antrieb-Stellmotor 18 gekuppelt. Am, in Förderrichtung gesahenen. Ende des Troges 7 ist ein Auslaßstutzen 19 mit einem Hosenstück 20 vorgesehen. Das Hosenstück teilt den Auslaß über eine entsprechende Klappe in einen Überlaufstutzen 21 und einen Abpackschirm 22. Arm Auslaßstutzen 19, wie auch am Boden des Trogs 7 und an dessen Deckel 9, sind Thermofühler 23, 24, 25 angeordnet.

Beim Betrieb der Misch- und Kühlschnecke 3 wird das vorgekühlte Gut über den Aufgabetrichter 4 zugeführt. Eine Brückenbildung des Gutes wird durch die über den Pneumatik- oder Hydraulikzylinder im Genäuse 6 bewegte Kurbelweile 5 und durch einen am Aufgabetrichter 4 angebrachten Rüttler vermieden. Dadurch fält das Gut auf die im Trog 7 sich drehende Schnecke 14 und wird nach oben in Richtung auf den Auslaß geführt. Über das im Schneckeninnenraum angeordnete Sprührohr 12 wird über den Zufuhrstutzen 17 flüssiger oder gasförmiger Stickstoff zugeführt, so daß das Gut am Auslaßstutzen 19, gemessen mit dem Thermofühler 23, eine Temperatur zwischen 1°C und 4°C aufweist. Die Zufuhr des Stickstoffes wird durch eine Regeleinrichtung, die durch die Thermofühler 23, 24, 25 gesteuert wird, gerageit Wärmeverluste werden durch die Isolierung 8 des Troges bezienungsweise 10 des Deckels vermieden. Dadurch ist es möglich, innerhalb der kurzen Förderstrecke von, in diesem Beispiel etwa 3 Metern, nicht nur das ermofindliche Gut ohne Qualtitäseinbuße zu fördern, sondern auch gleichzeitig auf die gewünschte Abpacktemperatur zu kühlen, und, bei Eingabe von mehreren verschiedenen Produkten, auch diese Produkte zu mische. Hinzu kommt, daß der Stickstoff gleichzeitig eine Schutzgasatmosphäre darstellt, so daß die Abpackstation Beutel verlassen, die mit auch im Karn gekühltem Gut, das innerhalb des Beutels von einer Schutzgasatmospäre umgeben ist, gefühlt sind.

## Patentansprüche

1. Einrichtung zum Kühlen und Hochfördem von empfindlichem und verderblichem, geschnitzeltem Roh-Gemüse und Roh-Salaten in den Trichter einer Abpackstation unter Einsatz einer Schräg-Förderschnecke mit Aufgabetrichter, dadurch gekennzeichnet, daß das an den Aufgabetrichter (4) anschließende Schneckengehäuse mit einem wärmeisolierenden Mantel (8) versehen und trogförmig ausgebildet ist, daß die Schnecke (14) mit Abstand vom Trogboden verläuft und an den Kanten (16) abgerundet verdickt ist, daß zwischen einem den Trog (7) abschließnden, ebenfalls wärmeisolierten (10) Deckel (9) und der Schnecke (14) ein Sprührohr (12) zum Einleiten von flüssigem und/oder gasförmigem Kältemittel in das Schneckeninnere (13) vorgesehen ist und daß der Abstand der Schnecke (14) vom Trogboden etwa der doppelten Dicke des Fördergutes entspricht.

2. Einrichtung nach Anspruch 1, dadurch gekennzeichnet, daß die Steigung der Wendel der Schnecke (14) nach dem Aufgabetrichter hier deutlich größer ist als innerhalb dieses Aufgabetrichters (4).

3. Einrichtung nach Anspruch 1, dadurch gekennzeichnet, daß das Sprührohr (12) beim Aufgabetrichter (4) an die Kältemittelzuleitung (17) angeschlossen ist.

4. Einrichtung nach einem oder mehreren der vorhergehenden Ansprüche, dadurch gekennzeichnet, daß an der Trogunterseite und am Trogdeckel (9), wie auch beim Auslaß (19), mindestens je ein Temperaturfühler (23, 24, 25) angeordnet ist.

5. Einrichtung nach einem oder mehreren der vorhergehenden Ansprüche, dadurch gekennzeichnet, daß zum Antrieb der Schnecke (14) ein Stellmotor (18) vorgesehen ist.

## Claims

1. Apparatus for chilling and elevating sensitive and perishable, sliced raw vegetables and raw salads into the hopper of a packaging station, incorporating and inclined screw conveyor with delivery hopper, characterised in that the worm housing, adjoining the delivery hopper (4), is provided with a thermal insulating jacket (8) and is in trough form, that the worm (14) runs at a distance from the trough floor and said worm is rounded at the edges (16), that between the cover (9), also thermally insulated (10), covering the trough (7), and the worm (14), there is a spray tube (12) for introducing fluid and/or gaseous coolant into the worm interior (13), and that the distance of the worm (14) from the trough floor corresponds to about twice the thickness of the material being conveyed.

2. Apparatus according to Claim 1, characterised in that the pitch of the blade of the screw (14) after the delivery hopper, is clearly greater than within the delivery hopper (4).

3. Apparatus according to Claim 1, characterised in that the spray tube (12) is connected to the coolant supply line (17) near the delivery hopper (4).

4. Apparatus according to one or more of the preceding Claims, characterised in that temperature sensors (23, 24, 25) are fitted, at least singly at the trough underside, and at the trough cover (9) as well as at the exit (19).

5. Apparatus according to one or more of the preceding claims, characterised in that a servo motor (18) is envisaged for driving the worm (14).

## Revendications

1. Dispositif pour réfrigérer et transporter vers le haut des légumes crus émincés, fragiles et périssables, ainsi que des salades crues, jusque dans la trémie d'un poste de conditionnement, en utilisant une vis sans fin convoyeuse inclinée à entonnoir de déversement, caractêrisé par le fait que le boîtier de la vis sans fin, se raccordant à l'entonnoir de déversement (4), est muni d'une enveloppe (8) thermiquement isolante et est réalisé en forme d'auge ; par le fait que la vis sans fin (14) s'étend à distance du fond de l'auge et est arrondie sur ses bords (16), avec épaississement ; par le fait qu'il est prévu, entre la vis sans fin (14) et un couvercle (9) qui obture l'auge (7) et est lui aussi isolé thermiquement (10), un tube de pulvérisation (12) pour introduire un agent frigorigène liquide et/ou gazeux dans l'espace interne (13) de la vis sans fin ; et par le fait que la distance comprise entre la vis sans fin (14) et le fond de l'auge correspond, sensiblement, au double de l'épaisseur de la matière acheminée.

2. Dispositif selon la revendication 1, caractérisé par le fait que le pas de l'hélice de la vis sans fin (14) est nettement plus grand, en direction de l'entonnoir de déversement, qu'à l'intérieur de cet entonnoir de déversement (4).

3. Dispositif selon la revendication 1, caractérisé par le fait que le tube de pulvérisation (12) est raccordé, au voisinage de l'entonnoir de déversement (4), au conduit (17) d'amenée de l'agent frigorigène.

4. Dispositif selon l'une ou plusieurs des revendications précédentes, caractérisé par le fait qu'au moins une sonde thermométrique respective (23, 24, 25) est implantée à la face inférieure de l'auge et sur le couvercle (9) de cette auge, ainsi qu'à la sortie (19).

5. Dispositif selon l'une ou plusieurs des revendications précédentes, caractérisé par le fait qu'un servomoteur (18) est prévu pour l'entrainement de la vis sans fin (14).

Fig. 1

EP 0 181 563 B2

Fig. 3